# FASCICULE DE BREVET EUROPEEN

(11) **EP 3 487 763 B1**
(45) Date de publication et mention de la délivrance du brevet: **01.07.2020**
(21) Numéro de dépôt: 17754400.4
(22) Date de dépôt: 20.07.2017
(51) Int. Cl.: B64D 27/12, B64D 33/02

(54) **BERCEAU POUR TURBOPROPULSEUR A MANCHE D'ENTRÉE D'AIR INTÉGRÉE**
TRÄGER FÜR EIN TURBOPROPELLERTRIEBWERK MIT INTEGRIERTEM LUFTEINLASSKANAL
CRADLE FOR A TURBOPROPELLER ENGINE WITH INTEGRATED AIR INLET DUCT

(30) Priorité: 25.07.2016 FR 1657123
(43) Date de publication de la demande: 29.05.2019
(73) Titulaire: Safran Aircraft Engines, 75015 Paris (FR)
(72) Inventeur: EICHSTADT, Frédéric, Paul, 77550 MOISSY-CRAMAYEL (FR); EL GHANNAM, Nora, 77550 MOISSY-CRAMAYEL (FR); FERRIER, Romain, Jean-Claude, 77550 MOISSY-CRAMAYEL (FR); HELLEGOUARCH, Antoine, Elie, 77550 MOISSY-CRAMAYEL (FR)
(74) Mandataire: Gevers & Orès
(86) Numéro de dépôt international: PCT/FR2017/052002
(87) Numéro de publication internationale: WO 2018/020112

(56) Documents cités:
- EP-A1- 1 538 080
- WO-A2-2008/103735
- US-A- 5 725 180
- US-A1- 2011 174 918
- US-A1- 2015 251 768

## Description

### Domaine technique de l'invention:

La présente invention se rapporte à la fixation des groupes moteurs sur les aéronefs. Elle concerne plus particulièrement un berceau apte à assurer l'accrochage ou la suspension d'un turbopropulseur sous une voilure d'un aéronef.

### État de l'art :

Un turbopropulseur est conventionnellement suspendu à la voilure d'un aéronef par l'intermédiaire d'un berceau, qui doit répondre à plusieurs critères.

Un tel berceau est situé dans un flux d'écoulement d'air lorsque l'avion se déplace, et en particulier dans le courant de l'hélice qui est entraînée par ledit turbopropulseur. Le berceau doit, pour cette raison, présenter un encombrement minimum autour du turbopropulseur afin de minimiser l'impact de l'obstacle que représente le turbopropulseur dans les écoulements d'air, qu'il s'agisse des écoulements d'air provoqués par le déplacement de l'aéronef, ou des écoulements d'air provoqués par l'hélice du turbopropulseur.

Un tel berceau doit également permettre la transmission à la voilure des efforts statiques et dynamiques engendrés par le turbopropulseur, tels que le poids, la poussée, la reprise du couple du turbopropulseur, ou plus généralement les différents efforts dynamiques auxquels le turbopropulseur soumet la voilure lors de son fonctionnement. Pour cela, un berceau doit présenter des caractéristiques de rigidité élevée.

En outre, un tel berceau doit prévoir différents volumes destinés à accueillir différents organes, accessoires, ou équipements permettant le fonctionnement du turbopropulseur, comme cela est décrit dans les documents EP-1.538.080-A1, WO-2008/103735-A2, US-2015/251768-A1, et US-2011/174918-A1.

Par exemple, un tel berceau doit pouvoir accueillir une manche d'entrée d'air destiné à permettre l'alimentation en air frais d'une turbine à gaz du turbopropulseur, et un conduit relié à cette manche entrée d'air qui permet de débarrasser l'air frais aspiré des impuretés et/ou des corps étrangers qu'il pourrait contenir afin d'éviter que ceux-ci ne soient introduits dans la turbine à gaz du turbopropulseur.

Un tel berceau est décrit dans le document US-5 725 180 A.

Le berceau doit également accueillir différents équipements du turbopropulseur tels que par exemple un calculateur et un boîtier d'accessoires, connu sous l'acronyme anglo-saxon d'AGB (Accessory Gear Box) comportant notamment un alternateur et un démarreur du turbopropulseur.

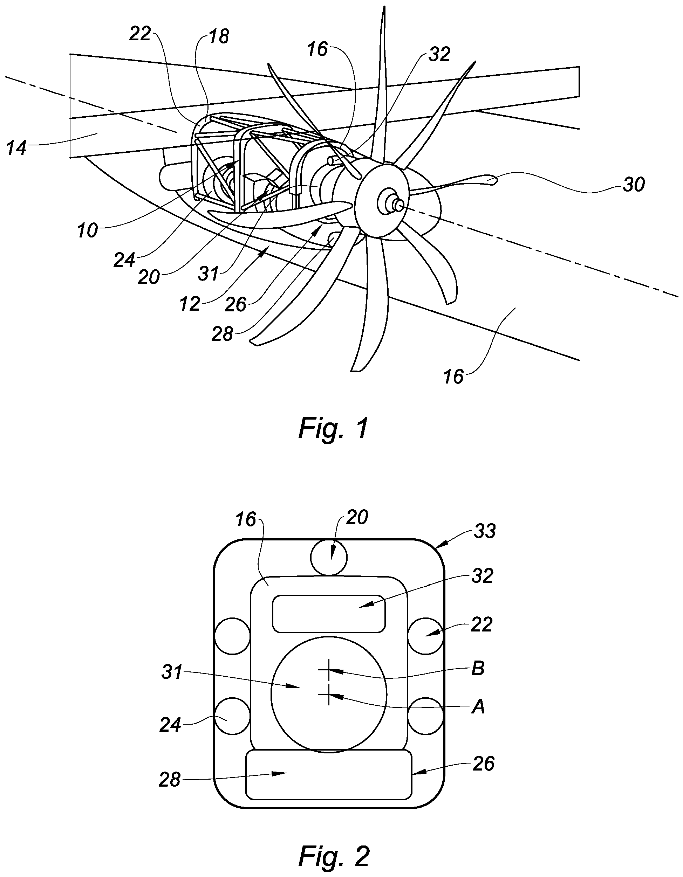

La figure 1 représente un turbopropulseur 12 porté par un berceau 10 réalisé selon l'état de la technique, ledit berceau 10 étant fixé sous l'aile 14 d'un aéronef. Le berceau 10 comporte par exemple deux arceaux 16, 18 avant et arrière ouverts à leurs extrémités inférieures et présentant en particulier des formes de U inversés, liés entre eux par un treillis 20. Le berceau comporte en particulier des bielles supérieures 22 et des bielles inférieures 24. Le berceau 10 enveloppe le turbopropulseur 12 tout en laissant relativement libre sa partie basse, pour son entretien ou sa dépose.

Le berceau 10 reçoit, dans sa partie basse, une manche d'entrée d'air 26, dont on aperçoit une bouche d'entrée 28 située derrière une hélice 30 du turbopropulseur. La manche d'entrée d'air 26 s'étend longitudinalement au moins en partie sous le turbopropulseur 12. Un conduit formant piège à particules (non visible sur la figure 1), qui permet de dévier du turbopropulseur les impuretés et corps étrangers qui sont aspirés par la manche entrée d'air pour les rejeter dans le flux d'air baignant le turbopropulseur lors de l'avancée de l'aéronef, est conventionnellement relié à la manche d'entrée d'air, et s'étend également sous le turbopropulseur 12.

En avant de l'arceau avant 16, le berceau 10 reçoit un réducteur 31 surmonté par un boîtier d'accessoires AGB 32. Enfin, un calculateur (non représenté) peut également être agencé dans une partie haute du berceau 10.

Selon cette conception, la manche d'entrée d'air 26 et le piège à particules, nécessaires au fonctionnement du turbopropulseur 12, s'étendent sous le turbopropulseur 12. Ces conduits, placé en-dessous du turbopropulseur 12, limitent la place disponible pour l'installation d'autres équipements, organes ou accessoires sous le turbopropulseur, qui sont par conséquent agencés dans une partie supérieure du berceau 10, comme c'est le cas du boîtier AGB 32. La figure 2 illustre plus particulièrement l'implantation du réducteur 31 et du boîtier AGB 32. Selon cette figure, l'axe B de l'hélice 30 en sortie du réducteur 31 est décalé au-dessus de l'axe A du turbopropulseur, et le boîtier d'accessoires 32 est agencé sensiblement au-dessus d'un carter du réducteur 31. D'autres accessoires ou équipements (non visibles sur la figure 2) peuvent aussi y être implantés. Cette implantation n'est pour autant pas optimale, car elle est située dans une zone de températures élevées du turbopropulseur, l'air chauffé par le turbopropulseur en fonctionnement étant confiné en partie haute du berceau 10 par une nacelle 33 de l'aéronef qui carène le berceau 10, alors même qu'il serait préférable que ces accessoires soient placés dans une partie inférieure du berceau, où ils seraient mieux refroidis.

Par ailleurs, selon cette conception, il n'est pas envisageable de réduire le nombre de bielles du treillis de bielles 20, car en ce cas, le berceau 10 ne présenterait plus la rigidité nécessaire à la reprise des efforts statiques et dynamiques exercés par le turbopropulseur 12.

Un autre inconvénient majeur de cette conception est que la disposition de la manche d'entrée d'air 26 et du piège à particules sous le turbopropulseur 12 complique les opérations de maintenance du turbopropulseur 12. En effet, conventionnellement, la manche d'entrée d'air 26 et le piège à particules sont portés par un support commun appelé "barque", qui est fixé sous le turbopropulseur 12, et qui présente un poids et un encombrement élevés. Lorsque l'on désire accéder au turbopropulseur 12, par exemple pour intervenir sur l'un de ses éléments constitutifs comme un compresseur ou une turbine par le truchement d'une trappe d'accès, il est nécessaire de préalablement démonter et ôter cette barque avant d'accéder au turbopropulseur 12. Il en est de même lorsqu'il s'agit d'effectuer la dépose du turbopropulseur 12.

Par ailleurs en fonctionnement, cette conception conduit également la manche d'entrée d'air 26, du fait de sa localisation en partie inférieure du berceau 10, comme représenté à la figure 2, à absorber un grand nombre de corps étrangers ou de grandes quantités d'eau, en particulier dans les situations de roulage et/ou de décollage de l'aéronef, puisque la manche d'entrée d'air 26 est agencée à proximité du sol où elle est le plus à même absorber des corps étrangers ou de l'eau stagnant à la surface du sol. Ce positionnement augmente la probabilité d'absorption de corps étrangers ou d'eau par le turbopropulseur 12, étant donné que le piège à particules ne peut, de par sa conception, pas filtrer l'intégralité des corps étrangers ou de l'eau aspirés par la manche d'entrée d'air 26.

Il existe par conséquent un besoin pour un berceau 10 de conception différente, permettant d'une part de localiser les accessoires et équipements du turbopropulseur 12 tels que le boîtier AGB 32 en position basse afin d'en améliorer le refroidissement et afin de faciliter l'accessibilité au turbopropulseur 12, et d'autre part permettant de localiser la manche d'entrée d'air 26 en position haute afin d'une part de faciliter l'accès au turbopropulseur 12 et d'autre part de réduire les risques d'absorption de corps étrangers et/ou d'eau par celle-ci.

Le document EP-1.538-080-B1, qui est considéré comme le document de l'art antérieur le plus proche, décrit et représente un berceau pour un turbopropulseur d'aéronef orienté sensiblement suivent une direction axiale, spécifiquement dédié à la suspension de moteurs de fortes puissances susceptibles de générer des couples de reprise élevés sur les berceaux qui les portent. Le berceau décrit dans ce document comporte un arceau avant et un arceau arrière qui s'étendent transversalement par rapport à ladite direction axiale, qui sont reliés l'un à l'autre par au moins un treillis de bielles latérales et par un caisson supérieur permettant d'améliorer la rigidité du berceau, qui s'étend axialement entre les arceaux. Le caisson est cloisonné pour présenter une rigidité maximale, en complément du treillis de bielles.

Cette conception ne permet pas de remédier à la problématique de positionnement des accessoires et équipements du turbopropulseur 12 dans le berceau, puisque le berceau comporte d'une part, un caisson qui est cloisonné et ne peut donc être utilisé pour un autre usage et occupe de surcroît un volume important en pure perte et car, d'autre part, le berceau comporte toujours un nombre élevé de bielles latérales qui font obstacle à l'implantation d'organes et d'accessoires et ne sont donc pas susceptibles de libérer d'espaces supplémentaires pour des organes ou accessoires du moteur.

### Exposé de l'invention :

L'invention remédie aux inconvénients susmentionnés en proposant une nouvelle conception de berceau hautement rigide apte à libérer un volume conséquent sous le turbopropulseur afin d'en faciliter l'accès, et permettant par ailleurs d'éloigner la manche d'entrée d'air du sol afin de limiter l'absorption de corps étrangers par le turbopropulseur.

Dans ce but, l'invention propose un berceau pour un turbopropulseur d'aéronef orienté suivant une direction sensiblement axiale, comportant un arceau avant et un arceau arrière s'étendant transversalement par rapport à ladite direction axiale, lesdits arceaux étant ouverts à leurs extrémités inférieures et reliés l'un à l'autre par au moins un longeron axial s'étendant entre lesdits arceaux, caractérisé en ce que le longeron est agencé en partie supérieure du berceau et en ce qu'il est formé d'une seule pièce avec l'arceau avant et avec au moins un tronçon tubulaire configuré pour définir une manche d'entrée d'air dudit turbopropulseur.

Un tel longeron permet de participer de manière prépondérante à la rigidité du berceau, ce qui permet, en conjonction avec des capots dits "structurants" permettant de clore le berceau et ayant une fonction de structurelle de rigidification, de pouvoir limiter le nombre de bielles du berceau, notamment en position inférieure.

Le déplacement de la manche d'entrée d'air en position haute, permet de libérer les zones du berceau situées sous le turbopropulseur de la place précédemment occupée par la manche d'entrée d'air, afin d'y disposer à la place des accessoires et équipements aisément démontables, cette disposition permettant de faciliter l'accès sous le turbopropulseur, par exemple à des fins de maintenance ou de démontage.

Selon d'autres caractéristiques de l'invention :
- le longeron est de surcroît formé d'une seule pièce avec au moins une partie d'un conduit formant piège à particules,
- le tronçon tubulaire comporte une entrée d'air qui débouche sensiblement dans un plan transversal dudit arceau avant,
- le tronçon tubulaire comporte une sortie d'air qui débouche à l'intérieur dudit berceau dans un plan sensiblement perpendiculaire au plan de l'entrée d'air,
- le berceau comporte deux bielles latérales fixées de part et d'autre de parties supérieures desdits arceaux, à l'exclusion de toute autre bielle,
- le conduit formant piège à particules comporte une extrémité avant qui débouche dans le tronçon tubulaire et une extrémité arrière tubulaire et coudée, orientée vers l'extérieur du berceau et orientée suivant un axe sensiblement horizontal,
- le berceau comporte de surcroît deux parois latérales longitudinales, formées d'une seule pièce avec le longeron, ces parois s'étendant vers l'arrière à partir de l'arceau avant et bordant le longeron suivant toute sa longueur,
- des bords longitudinaux libres des parois latérales longitudinales sont configurés pour recevoir des charnières d'articulation de capots latéraux de protection du turbopropulseur,

L'invention propose aussi un ensemble propulsif d'aéronef, comportant un turbopropulseur fixé à un berceau du type décrit précédemment.

Selon une caractéristique de cet ensemble propulsif, le turbopropulseur comprend un réducteur qui s'étend en avant de l'arceau avant dudit berceau et sous l'entrée d'air du tronçon tubulaire. Le turbopropulseur comprend également une prise d'air, fixée à ladite entrée d'air et au moins un équipement du turbopropulseur, fixé sous ledit turbopropulseur. Par ailleurs, cet ensemble propulsif comporte deux capots en élytre, articulés chacun sur un bord des parois latérales longitudinales du berceau, qui sont jointifs en position fermée suivant une ligne longitudinale agencée sous le berceau. De tels capots en élytre, c'est à dire articulés autour de deux axes parallèles proches ou confondus à la manière des élytres d'un coléoptère, sont largement connus de l'état de la technique.

Selon une autre caractéristique de cet ensemble propulsif, les capots en élytre sont des capots structurants participant à la rigidification dudit ensemble propulsif.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 (déjà commentée) est une vue en perspective d'un berceau selon un état antérieur de la technique fixé sous une aile d'un aéronef et recevant un turbopropulseur ;
- la figure 2 (déjà commentée) est une vue schématique en coupe transversale du berceau et du turbopropulseur de la figure 1 ;
- la figure 3 est une vue schématique en coupe, par un pan transversal, d'un turbopropulseur reçu dans un berceau réalisé conformément à l'invention ;
- la figure 4 est une vue schématique en perspective d'un turbopropulseur reçu dans le berceau réalisé conformément à l'invention ;
- la figure 5 est une vue schématique, en coupe transversale par le plan P de la figure 3, du berceau et du turbopropulseur des figures 3 et 4 ;
- les figures 6 à 8 sont des vues en perspective d'un ensemble monobloc comportant le longeron supérieur, l'arceau avant, le tronçon tubulaire de la manche d'entrée d'air, et le piège à particules mis en œuvre dans un berceau selon l'invention.

### Description d'un mode de réalisation :

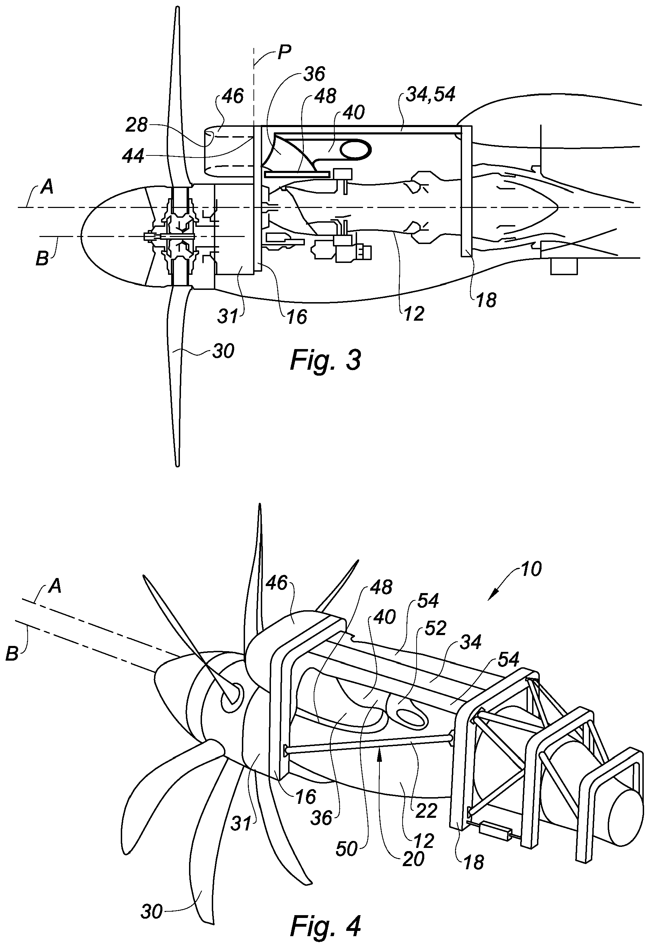

Comme l'illustre la figure 4, le berceau 10 selon l'invention comporte, de la même manière que les berceaux connus de l'état de la technique, un arceau avant 16 et un arceau arrière 18 ouverts à leurs extrémités inférieures et présentant en particulier des formes de U inversés, qui s'étendent transversalement par rapport à ladite direction axiale A du turbopropulseur 12. Les arceaux 16, 18 sont reliés par un treillis 20 de bielles.

Comme cela est déjà connu de l'état de la technique, les arceaux avant 16 et arrière 18 sont reliés par au moins un longeron axial 34 s'étendant entre lesdits arceaux 16, 18.

Conformément à l'invention, le longeron 34 est avantageusement agencé en partie supérieure du berceau et il est formé d'une seule pièce avec l'arceau avant 16. Un tel longeron permet de participer de manière notable à la rigidité du berceau,

De plus, le longeron 34 est avantageusement formé d'une seule pièce avec au moins un tronçon tubulaire 36 qui est configuré pour définir la manche d'entrée d'air 28 dudit turbopropulseur.

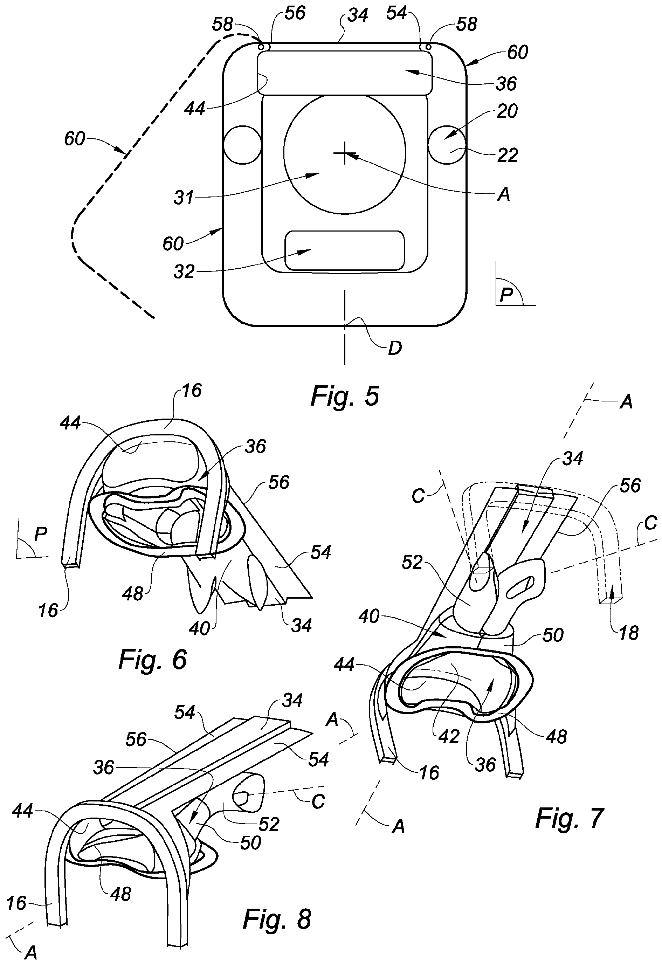

Cette configuration a été représentée plus particulièrement aux figures 6 à 8.

Dans le mode de réalisation préféré de l'invention, le tronçon tubulaire 36 ne définit pas l'intégralité de la manche d'entrée d'air 26, mais seulement une partie de celle-ci, comme on le verra dans la suite de la présente description.

Ainsi, le berceau 10 comporte une seule et même pièce comportant a minima l'arceau avant 16, le longeron 34, et le tronçon tubulaire 36. Cette pièce peut être réalisée par moulage d'un matériau métallique, ou être réalisée en construction mécanosoudée. L'arceau arrière 18 est rapporté sur cet ensemble, et plus particulièrement à l'arrière du longeron 34 comme l'illustre la figure 4. Le treillis 20 de bielles est ensuite rapporté sur le berceau 10 de manière à être fixé, d'une part, à l'arceau arrière 18, et d'autre part à l'ensemble constitué du longeron 34, de l'arceau avant 16, et du tronçon tubulaire 36.

Avantageusement, le longeron 34 est de surcroît formé d'une seule pièce avec au moins une partie d'un conduit 40 formant piège à particules.

Comme l'illustrent les figures 6 à 8, le tronçon tubulaire 36 est de préférence agencé sous le longeron 34. Lorsque l'ensemble constitué du longeron 34, de l'arceau avant 16, et du tronçon tubulaire 36 est réalisé par moulage, une paroi interne 42 du tronçon tubulaire 36 est jointive avec une partie avant du longeron 34.

Comme l'illustre la figure 6, le tronçon tubulaire 36 comporte une entrée d'air 44 qui débouche sensiblement dans un plan transversal P de l'arceau avant 16. Par ailleurs, dans le mode de réalisation préféré de l'invention, chaque arceau 16, 18 présente une forme de U inversé, afin de permettre une extraction plus élevée du turbopropulseur 12 en le faisant descendre à partir du berceau 10. De ce fait, l'entrée d'air 44 peut être de préférence agencée dans une concavité de l'arceau avant 16, dont elle épouse la forme.

Il sera compris que cette configuration n'est pas limitative de l'invention, et que l'entrée d'air 44 pourrait ne pas épouser la forme de la concavité de l'arceau avant 16, ou déboucher dans une face avant d'un bras transversal de l'arceau avant 16.

Comme on l'a vu, le tronçon tubulaire 36 ne constitue pas l'intégralité de la manche d'entrée d'air 26. Comme l'illustre la figure 3, une prise d'air 46, comportant à son extrémité la bouche d'entrée d'air 28, est prévue pour être rapportée à l'avant de l'arceau avant 16 de manière à coïncider avec l'entrée 44 et pour être interposée axialement entre cet arceau 16 et l'hélice 30 du turbopropulseur 12.

Le tronçon tubulaire 36 comporte par ailleurs une sortie d'air 48 qui débouche à l'intérieur du berceau 10 dans un plan P' sensiblement perpendiculaire au plan P de l'entrée d'air 44, c'est-à-dire dans un plan P' sensiblement horizontal. Comme l'illustre la figure 3, cette sortie d'air 48 est destinée à être abouchée à une entrée d'air (non représentée) d'un compresseur du turbopropulseur 12 pour en assurer l'alimentation en air. Ainsi, la paroi interne 42 du tronçon tubulaire 36 présente-t-elle une forme sensiblement coudée entre son entrée d'air 44 et sa sortie d'air 48.

Le conduit 40 formant piège à particules est, comme on l'a vu, relié au tronçon tubulaire 36, puisque sa fonction et de piéger les particules contenues dans l'air aspiré par la manche d'entrée d'air afin d'éviter qu'elles ne soient aspirées par le compresseur du turbopropulseur 12.

À cet effet, le conduit 40 est relié à la paroi interne 42 du tronçon tubulaire 36. En particulier, le conduit 40 comporte, comme l'illustrent les figures 7 et 8, une extrémité avant 50 qui débouche dans le tronçon tubulaire 42 et au moins une extrémité arrière tubulaire coudée 52, orientée vers l'extérieur du berceau 10 et orientée suivant un axe C sensiblement horizontal. De préférence, comme l'illustre la figure 7, l'extrémité avant 50 du conduit 40 est reliée à deux extrémités arrière coudées 52 tubulaires symétriques, orientées chacune d'un côté vers l'extérieur du berceau, selon deux axes C qui forment un angle inférieur à 90° avec la direction axiale A du turbopropulseur 12, afin de permettre l'éjection des corps étrangers et de l'eau qui ont été filtrés dans le flux d'air qui baigne le turbopropulseur 12 lors de l'avancée de l'aéronef.

Cet agencement en partie supérieure du berceau 10 du tronçon tubulaire 36 délimitant la manche d'entrée d'air 28 et du conduit 40 formant piège à particules est particulièrement avantageux, car il permet, par rapport à un berceau 10 conventionnel, de déplacer ces éléments en partie supérieure du berceau 10 là où ils sont le moins à même d'absorber des corps étrangers et/ou de l'eau stagnant au niveau du sol. Par conséquent, la filtration de l'air d'alimentation du turbopropulseur 12 est grandement améliorée. En outre, cette configuration permet de libérer la partie inférieure du berceau 10 de ces éléments, ce qui favorise l'accessibilité au turbopropulseur 12, que ce soit à des fins de maintenance ou de démontage.

Par ailleurs, comme l'illustre la figure 5, la partie inférieure du turbopropulseur 12 étant libérée de la manche d'entrée d'air 26 et du piège à particules, elle est à même d'accueillir le boîtier d'accessoires 32 dans une partie inférieure du berceau 10 qui n'est pas soumise à une accumulation d'air chaud. Cette configuration permet d'améliorer le refroidissement des organes contenus dans ce boîtier d'accessoires 32, comme par exemple un alternateur ou un démarreur du turbopropulseur 12, organes qui sont particulièrement sensibles à la chaleur.

Par ailleurs, comme on peut le voir sur les figures 6 à 8, le berceau 10 comporte avantageusement deux parois latérales longitudinales 54, formées d'une seule pièce avec le longeron 34, qui s'étendent vers l'arrière à partir de l'arceau avant 16 et qui bordent le longeron 34 suivant toute sa longueur.

Ces parois 54 sont liées à l'ensemble constitué du longeron 34 de l'arceau avant 16 et du tronçon tubulaire 36. De préférence, lorsque cet ensemble est moulé, ces parois 54 sont également réalisées lors du moulage. Avantageusement, comme l'illustre la figure 5, des bords longitudinaux libres 56 de ces parois latérales longitudinales 54 sont configurés pour recevoir des charnières 58 d'articulation de capots latéraux 60 de protection du turbopropulseur 12, qui délimitent une nacelle du turbopropulseur 12. Les capots 60 sont articulés autour de ces charnières 58 de manière à pouvoir être ouverts en élytres comme représenté en traits pointillés à la figure 5 en ce qui concerne le capot 60 situé sur la gauche de la figure 5, ou être jointifs en position fermée suivant une ligne longitudinale D agencée sous le berceau 10, comme représenté en traits forts à la figure 5.

De tels capots 60 en élytre, c'est à dire articulés autour des deux axes d'articulation parallèles que forment les charnières 58 à la manière des élytres d'un coléoptère, sont largement connus de l'état de la technique.

Toutefois, les capots 60 latéraux de protection sont ici des capots structurants qui participent à la rigidité de l'ensemble du berceau 10 et des capots 60.

Par rapport à un berceau connu de l'état de la technique, le berceau 10 équipé des capots 60 structurants ainsi proposé présente une rigidité accrue. De ce fait, il peut comporter un treillis 20 de bielles comportant un nombre réduit de bielles, et en particulier ne comportant plus de bielles en position basse. Ainsi, comme l'illustrent les figures 4 et 5, le treillis 20 de bielles ne comporte plus que des bielles latérales supérieures 22 fixées de part et d'autre de parties supérieures desdits arceaux 16, 18, à l'exclusion de toute autre bielle. Cette configuration permet de faciliter de manière conséquente l'accessibilité à la partie inférieure du berceau 10, et donc l'accessibilité au turbopropulseur 12.

Le berceau 10 selon l'invention trouve donc particulièrement son application dans un ensemble propulsif d'aéronef comportant un turbopropulseur fixé à ce berceau 10, et pourvu d'un réducteur 31 s'étendant en avant de l'arceau avant 16 dudit berceau 10 et sous l'entrée d'air 44 du tronçon tubulaire 36, comme représenté à la figure 3. Dans cet ensemble propulsif, cette entrée d'air 44 est alimentée par une prise d'air 46 rapportée comportant à son extrémité une bouche 28 et interposée entre l'arceau avant 16 et l'hélice 30. Un tel ensemble propulsif peut subir de manière aisée des opérations de maintenance des éléments de son turbopropulseur 12 dans la mesure où les équipements tels que le boîtier d'accessoires 32 du turbopropulseur 12 sont facilement démontables et ne gênent pas l'accès à la partie inférieure du turbopropulseur 12, ce qui permet d'intervenir directement sur le turbopropulseur 12, ou de l'extraire facilement du berceau 10.

## Revendications

1. Berceau (10) pour un turbopropulseur (12) d'aéronef orienté suivant une direction sensiblement axiale, comportant un arceau avant (16) et un arceau arrière (18) s'étendant transversalement par rapport à ladite direction axiale (A), lesdits arceaux (16, 18) étant ouverts à leurs extrémités inférieures et reliés l'un à l'autre par au moins un longeron axial (34) s'étendant entre lesdits arceaux (16, 18),
**caractérisé en ce que** le longeron (34) est agencé en partie supérieure du berceau (10) et **en ce qu'**il est formé d'une seule pièce avec l'arceau avant (16) et avec au moins un tronçon tubulaire (36) configuré pour définir une manche d'entrée d'air (26) dudit turbopropulseur (12).

2. Berceau (10) selon la revendication précédente, **caractérisé en ce que** le longeron (34) est de surcroît formé d'une seule pièce avec au moins une partie d'un conduit (40) formant piège à particules.

3. Berceau (10) selon l'une des revendications 1 ou 2, **caractérisé en ce que** le tronçon tubulaire (36) comporte une entrée d'air (44) qui débouche sensiblement dans un plan transversal (P) dudit arceau avant (16).

4. Berceau (10) selon l'une des revendications 1 à 3, **caractérisé en ce que** le tronçon tubulaire (36) comporte une sortie d'air (48) qui débouche à l'intérieur dudit berceau (10) dans un plan (P') sensiblement perpendiculaire au plan (P) de l'entrée d'air (44) .

5. Berceau (10) selon l'une des revendications 1 à 4, **caractérisé en ce qu'**il comporte deux bielles latérales (22) fixées de part et d'autre de parties supérieures desdits arceaux (16, 18), à l'exclusion de toute autre bielle.

6. Berceau (10) selon l'une des revendications 2 à 5, **caractérisé en ce que** ledit conduit (40) formant piège à particules comporte une extrémité avant (50) qui débouche dans le tronçon tubulaire (36) et au moins une extrémité arrière tubulaire et coudée (52), orientée vers l'extérieur du berceau et orientée suivant un axe (C) sensiblement horizontal.

7. Berceau (10) selon l'une des revendications 1 à 6, **caractérisé en ce qu'**il comporte de surcroît deux parois latérales longitudinales (54), formées d'une seule pièce avec le longeron (34), ces parois (54) s'étendant vers l'arrière à partir de l'arceau avant et bordant le longeron (34) suivant toute sa longueur

8. Berceau (10) selon la revendication 7, **caractérisé en ce que** des bords longitudinaux libres (56) des parois latérales longitudinales (54) sont configurés pour recevoir des charnières d'articulation (58) de capots latéraux (60) de protection du turbopropulseur.

9. Ensemble propulsif d'aéronef, comportant un turbopropulseur (12) fixé à un berceau (10) selon la revendication 8 et **caractérisé en ce que** le turbopropulseur (12) comprend :
- un réducteur (31) qui s'étend en avant de l'arceau avant (16) dudit berceau (10) et sous l'entrée d'air (44) du tronçon tubulaire (36),
- une prise d'air (46), fixée à ladite entrée d'air (44),
- au moins un équipement (32) du turbopropulseur (12), fixé sous ledit turbopropulseur (12),
- deux capots (60) en élytre, articulés chacun sur un bord (56) des parois latérales longitudinales (54) du berceau (10), qui sont jointifs en position fermée suivant une ligne longitudinale (D) agencée sous le berceau (10).

10. Ensemble propulsif selon la revendication précédente, **caractérisé en ce que** les capots (60) en élytre sont des capots structurants participant à la rigidification dudit ensemble propulsif.

## Patentansprüche

1. Träger (10) für ein Turbinenpropellertriebwerk (12) eines Luftfahrzeugs, der entlang einer im Wesentlichen axialen Richtung ausgerichtet ist, der einen vorderen Bügel (16) und einen hinteren Bügel (18) umfasst, die sich in Bezug auf die axiale Richtung (A) quer erstrecken, wobei die Bügel (16, 18) an ihren unteren Enden offen und miteinander durch mindestens einen axialen Holm (34), der sich zwischen den Bögen (16, 18) erstreckt, verbunden sind,
**dadurch gekennzeichnet, dass** der Holm (34) im oberen Teil des Trägers (10) eingerichtet und aus einem einzigen Stück mit dem vorderen Bügel (16) gebildet ist, und mit mindestens einem röhrenförmigen Abschnitt (36), der konfiguriert ist, um eine Lufteinlassmuffe (26) des Turbinenpropellertriebwerks (12) zu definieren.

2. Träger (10) nach dem vorstehenden Anspruch, **dadurch gekennzeichnet, dass** der Holm (34) außerdem aus einem einzigen Stück mit mindestens einem Teil einer Leitung (40), die eine Partikelfalle bildet, gebildet ist.

3. Träger (10) nach einem der Ansprüche 1 oder 2, **dadurch gekennzeichnet, dass** der röhrenförmige Abschnitt (36) einen Lufteintritt (44) umfasst, der im Wesentlichen in einer Querebene (P) des vorderen Bügels (16) mündet.

4. Träger (10) nach einem der Ansprüche 1 bis 3, **dadurch gekennzeichnet, dass** der röhrenförmige Abschnitt (36) einen Luftauslass (48) umfasst, der in dem Inneren des Trägers (10) in einer Ebene (P') im Wesentlichen senkrecht zu der Ebene (P) des Lufteinlasses (44) mündet.

5. Träger (10) nach einem der Ansprüche 1 bis 4, **dadurch gekennzeichnet, dass** er zwei seitliche Pleuel (22) umfasst, die auf jeder Seite von oberen Teilen der Bögen (16, 18) unter Ausschluss jedes anderen Pleuels befestigt sind.

6. Träger (10) nach einem der Ansprüche 2 bis 5, **dadurch gekennzeichnet, dass** die Leitung (40), die eine Partikelfalle bildet, ein vorderes Ende (50) umfasst, das in den röhrenförmigen Abschnitt (36) mündet, und mindestens ein röhrenförmiges und abgewinkeltes hinteres Ende (52), das zu der Außenseite des Trägers ausgerichtet und entlang einer im Wesentlichen horizontalen Achse (C) ausgerichtet ist.

7. Träger (10) nach einem der Ansprüche 1 bis 6, **dadurch gekennzeichnet, dass** er außerdem zwei Längsseitenwände (54) umfasst, die aus einem einzigen Stück mit dem Holm (34) gebildet sind, wobei sich diese Wände (54) erstrecken sich nach hinten ausgehend von dem vorderen Bügel und an dem Holm (34) entlang seiner gesamten Länge nach hinten erstrecken.

8. Träger (10) nach Anspruch 7, **dadurch gekennzeichnet, dass** die freien Längsränder (56) der Längsseitenwände (54) konfiguriert sind, um Anlenkscharniere (58) von Seitenschutzhauben (60) des Turbinenpropellertriebwerks aufzunehmen.

9. Luftfahrzeug-Antriebseinheit, die ein Turbinenpropellertriebwerk (12), das an einem Träger (10) nach Anspruch 8 befestigt ist, umfasst, und **dadurch gekennzeichnet, dass** das Turbinenpropellertriebwerk (12) Folgendes umfasst:
- einen Reduktor (31), der sich vor dem vorderen Bügel (16) des Trägers (10) und unter dem Lufteinlass (44) des röhrenförmigen Abschnitts (36) erstreckt,
- einen Lufteintritt (46), der an dem Lufteinlass (44) befestigt ist,
- mindestens eine Ausstattung (32) des Turbinenpropellertriebwerks (12), die unter dem Turbinenpropellertriebwerk (12) befestigt ist,
- zwei flügelförmige Hauben (60), die jeweils auf einem Rand (56) der Längsseitenwände (54) des Trägers (10) angelenkt sind, die in geschlossener Form entlang einer Längslinie (D), die unter dem Träger (10) eingerichtet ist, aneinanderstoßen.

10. Antriebseinheit nach dem vorstehenden Anspruch, **dadurch gekennzeichnet, dass** die flügelförmigen Hauben (60) an der Versteifung der Antriebseinheit teilnehmen.

## Claims

1. Cradle (10) for a turbopropeller engine (12) of an aircraft oriented in a substantially radial direction, comprising a front arch (16) and a rear arch (18) extending transversally with respect to said axial direction (A), said arches (16, 18) being open at their lower ends and connected to one another by at least one axial longeron (34) that extends between said arches (16, 18),
**characterised in that** the longeron (34) is arranged in the upper portion of the cradle (10) and **in that** it is formed of one single part with the front arch (16) and with at least one tubular section (36) configured to define an air inlet duct (26) of said turbopropeller engine (12).

2. Cradle (10) according to the preceding claim, **characterised in that** the longeron (34) is further formed of one single part with at least part of the pipe (40) forming the particulate trap.

3. Cradle (10) according to one of claims 1 or 2, **characterised in that** the tube section (36) comprises an air inlet (44) that substantially opens onto a transversal plane (P) of said front arch (16).

4. Cradle (10) according to one of claims 1 to 3, **characterised in that** the tube section (36) comprises an air outlet (48) that opens into said cradle (10) along a plane (P') substantially perpendicular to the plane (P) of the air inlet (44).

5. Cradle (10) according to one of claims1 to 4, **characterised in that** it comprises two lateral rods (22) secured on either side of the upper portions of said arches (16, 18), exclusive of any other rod.

6. Cradle (10) according to one of the claims 2 to 5, **characterised in that** said pipe (40) forming the particulate trap comprises a front end (50) that opens into the tube section (36) and at least one tubular and right-angled rear end (52), oriented outwards from the cradle and oriented along a substantially horizontal axis (C).

7. Cradle (10) according to one of claims 1 to 6, **characterised in that** it further comprises two longitudinal lateral walls (54), formed of one single part with the longeron (34), these walls (54) extending towards the rear from the front arch and running along the entire length of the longeron (34).

8. Cradle (10) according to claim 7, **characterised in that** the free longitudinal edges (56) of the longitudinal lateral walls (54) are configured to receive hinges (58) for the lateral protection hoods (60) of the turbopropeller engine.

9. Aircraft turboporpeller engine unit, **characterised in that** it comprises a turbopropeller engine (12) secured to a cradle (10) according to claim 9, and **characterised in that** the turbopropeller engine (12) comprises:
- a reduction gear (31) that extends to the front of the front arch (16) of said cradle (10) and under the air inlet (44) of the tube section (36),
- an air supply (46) secured to said air inlet (44),
- at least one item of equipment (32) of the turbopropeller engine (12), secured under said turbopropeller engine (12),
- two beetle-wing hoods (60), each hinged on an edge (56) of the longitudinal side walls (54) of the cradle (10), which are joined in a closed position along a longitudinal line (D) arranged under the cradle (10).

10. Power unit according to the preceding claim, **characterised in that** the beetle-wing hoods (60) are structural hoods that contribute to rigidifying said power unit.
